# DEMANDE DE BREVET EUROPEEN

(11) **EP 3 872 910 A1**
(43) Date de publication de la demande: **01.09.2021**
(21) Numéro de dépôt: 21159154.0
(22) Date de dépôt: 25.02.2021
(51) Int. Cl.: H01M 8/04089, H01M 8/0668, H01M 8/04119, H01M 8/0662, H01M 8/124

(54) **EXTRACTION DE CO2 DANS LA BOUCLE DE RECYCLAGE D'UNE PILE À COMBUSTIBLE**

(30) Priorité: 25.02.2020 FR 2001854
(71) Demandeur: Entrepose Group, 92700 Colombes (FR)
(72) Inventeur: DEMOULIN, Vincent, 75015 PARIS (FR)
(74) Mandataire: Regimbeau

(57) **Abrégé**

L'invention concerne une pile (12) à combustible hydrocarboné comportant :
- un circuit d'admission de combustible (13) configuré pour acheminer un flux de combustible,
- un module réactionnel (15) dans lequel débouche le circuit d'admission de combustible (13),
- un système de traitement du gaz recyclé (27) configuré pour recueillir le flux de combustible issu du module réactionnel (15).

## Description

### Domaine technique général et art antérieur

L'invention concerne le domaine technique général des piles à combustible, et plus précisément des piles à combustible hydrocarboné.

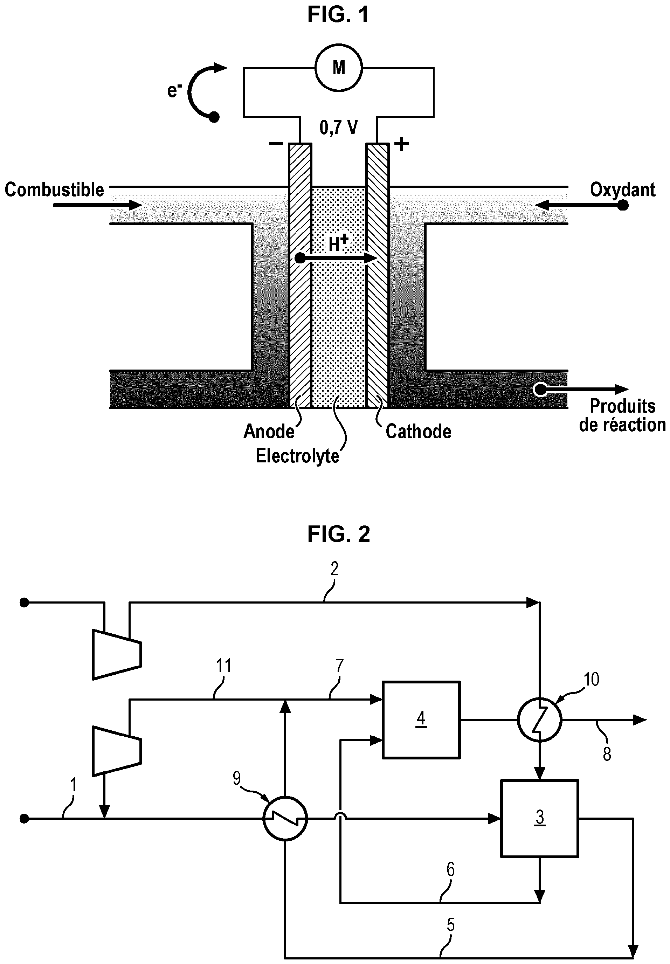

Classiquement, une pile à combustible, telle qu'illustrée en figure 1, comporte :
- deux circuits de distribution, un pour distribuer un combustible réducteur, un autre pour distribuer un oxydant ;
- deux électrodes : une anode et une cathode connectées aux bornes d'un consommateur électrique ;
- une couche échangeuse d'ions faisant fonction d'électrolyte, disposée entre l'anode et la cathode : elle bloque le passage des électrons et laisse passer les ions provenant soit du combustible oxydé soit de l'oxydant ;
- des catalyseurs qui accélèrent les réactions entre les réactifs.

Dans le cas des piles à membrane échangeuse de protons (présenté pour illustration), le combustible est convoyé jusqu'à l'anode par le circuit de distribution de combustible. Arrivé à l'anode, le combustible se dissocie en ions et en électrons. Les ions traversent alors la membrane, mais les électrons, bloqués, sont contraints d'emprunter un circuit extérieur et circulent de l'anode vers la cathode en passant par le consommateur électrique.

À la cathode, les ions de combustible, les électrons, et l'oxydant se recombinent au travers d'une réaction chimique préférentiellement exothermique, qui va donc produire de la chaleur pouvant être récupérée.

Dans le cas des piles à combustible à oxydes solides, des ions négatifs sont produits à la cathode en captant des électrons par le circuit extérieur. Ces ions traversent la membrane et réagissent avec le combustible présent côté anode en restituant les électrons.

D'une manière générale, la génération d'une tension électrique aux bornes du consommateur se fait donc grâce à l'oxydation sur une électrode d'un combustible réducteur couplée à la réduction sur l'autre électrode d'un oxydant.

Le plus couramment, le combustible est de l'hydrogène, provenant par exemple d'une électrolyse ou d'un réformage d'hydrocarbures, et l'oxydant est de l'air ou du dioxygène, pour l'abondance des ressources qu'ils présentent et la non toxicité des produits de la réaction.

Sont également connues des piles utilisant un combustible hydrocarboné, par exemple au gaz naturel ou d'autres carburants contenant du carbone : il s'agit des piles à haute température telles que les piles à combustible à oxydes solides ou d'autres types de piles combinées à une étape de réformage du gaz. Le combustible produit d'abord de l'hydrogène qui est ensuite consommé par la pile. Cependant la conversion de l'hydrogène dans ces piles n'est jamais totale, ce qui engendre une perte de rendement par rapport au potentiel.

Il est connu pour de telles piles à combustible de recycler du fluide issu de l'anode de la pile, tel qu'illustré en figure 2.

Une telle pile à combustible comporte un circuit d'admission de combustible 1 et un circuit d'admission d'oxydant 2 injectant respectivement un combustible dans la partie anode d'un module réactionnel 3 de la pile, et un oxydant dans la partie cathode du même module.

En sortie du module réactionnel 3, le flux d'oxydant est acheminé vers un brûleur 4 au moyen d'un circuit d'évacuation d'oxydant 6, le brûleur 4 étant configuré pour éliminer la fraction de combustible imbrûlé dans les flux provenant du module réactionnel 3.

En sortie du module réactionnel 3, un flux constitué de combustible inutilisé et de produits de réaction est évacué par un circuit de combustible usé 5 se divisant en deux branches.

Le circuit de combustible usé 5 comporte une boucle de recyclage 11 configurée pour réinjecter à l'admission une partie du fluide de combustible issu du module réactionnel 3, et un circuit d'évacuation 7 des produits de la réaction configuré pour injecter une partie du flux dans le brûleur 4.

En sortie du brûleur 4, les gaz brûlés sont évacués au moyen d'un échappement 8.

Un premier échangeur 9 et un deuxième échangeur 10 permettent respectivement de chauffer le flux de combustible entrant dans le module réactionnel 3 au moyen de la boucle d'évacuation de combustible 5 et de chauffer le flux d'oxydant entrant dans le module réactionnel 3 au moyen de l'échappement 8.

Le recyclage du combustible permet, d'une part, d'apporter l'eau nécessaire au bon déroulement des réactions de réformage et, d'autre part, d'augmenter le taux d'utilisation net du combustible. Mais pour évacuer les produits de la réaction (CO2 et H2O notamment), le recyclage ne peut être que partiel, et il subsiste une perte significative de combustible (H2 et CO) dans le gaz de purge. Ce gaz peut être brûlé dans le brûleur 4 et fournit une chaleur utilisable mais moins bien valorisée que l'électricité.

D'autre part, l'utilisation de carburants hydrocarbonés génère des émissions de CO2, polluantes et vecteur d'effet de serre. Ces émissions peuvent être compensées par l'utilisation de bio-gaz ou la captation du CO2 dans les fumées de l'échappement 8, mais la captation nécessitant de traiter de très gros volumes de gaz, elle est chère et difficile à mettre en œuvre.

Il existe donc un besoin d'améliorer le rendement des piles à combustibles fonctionnant avec un combustible hydrocarboné.

En outre, dans le cas d'utilisation de telles piles à combustibles dans des applications mobiles, par exemple un véhicule, la réduction des émissions polluantes est particulièrement recherchée.

### Présentation générale de l'invention

Un but de l'invention est d'augmenter le rendement des piles à combustible fonctionnant avec un combustible hydrocarboné.

Un autre but est de faciliter la captation du CO2 produit par la combustion, dans le but de réduire les émissions.

L'invention propose une pile à combustible hydrocarboné comportant :
- un circuit d'admission de combustible configuré pour acheminer un flux de combustible,
- un module réactionnel dans lequel débouche le circuit d'admission de combustible, et
- un système de traitement du gaz recyclé configuré pour recueillir le flux de combustible issu du module réactionnel,
le système de traitement du gaz recyclé comportant un circuit principal et un circuit de dérivation,
la pile étant configurée pour que le flux issu du module réactionnel se divise entre le circuit principal et le circuit de dérivation,
le circuit principal comportant un élément de filtration configuré pour extraire du dioxyde de carbone de la partie du flux issue du module réactionnel circulant au sein du circuit principal,
la pile étant configurée pour que le flux issu de l'élément de filtration et du circuit de dérivation soit réinjecté dans le circuit d'admission de combustible avec une température inférieure à la température du module réactionnel.

Ainsi, la pile permet de récupérer et de recycler le combustible n'ayant pas réagi.

En recyclant le combustible non utilisé jusqu'à sa consommation complète, le rendement de la pile à combustible est amélioré.

Avantageusement, l'invention est complétée par une ou plusieurs des caractéristiques suivantes, prises en combinaison :
- le circuit d'évacuation de combustible comporte en outre un élément de refroidissement configuré pour condenser au moins en partie le flux de combustible transitant dans le circuit principal, et un séparateur de phases configuré pour séparer les phases liquide et gazeuse du flux de combustible sortant de l'élément de refroidissement ; cela permet d'extraire de l'eau du flux issu du module réactionnel, et de réinjecter dans le circuit d'admission le combustible non utilisé sans être limité par l'accumulation de l'eau et du dioxyde de carbone à l'intérieur de la boucle ;
- l'élément de filtration est situé en aval de l'élément de refroidissement et du séparateur de phases ; cela permet d'effectuer la filtration sur un flux froid et dépourvu d'eau liquide, et donc d'améliorer l'efficacité de la filtration ;
- la pile comporte en outre un circulateur situé en aval de l'élément de filtration configuré pour réinjecter le flux sortant de l'élément de filtration dans le circuit d'admission ; le flux est donc filtré avant qu'il ne transite dans le circulateur, ce qui permet de retirer du flux les éléments réagissant avec l'élément de filtration et donc de réduire le flux dans le circulateur, ce qui permet de réduire la consommation énergétique du circulateur ;
- le circulateur (21) est configuré pour réinjecter le flux issu du circuit de dérivation (26) dans le circuit d'admission (13) ;
- la pile comporte des moyens de contrôle configurés pour ajuster la répartition du débit de flux issu du module réactionnel entre, d'une part, le circuit principal et, d'autre part, le circuit de dérivation ;
- la pile comporte en outre un dispositif de stockage et l'élément de filtration est adapté pour injecter le dioxyde de carbone capté lors de la filtration du flux dans le dispositif de stockage ; cela permet de limiter l'émission de gaz polluants dans l'atmosphère au cours du fonctionnement de la pile à combustible ;
- la pile comporte en outre :
   * un circuit d'évacuation de combustible configuré pour évacuer le flux de combustible issu du module réactionnel, le système de traitement du gaz recyclé étant configuré pour recueillir le flux issu du module réactionnel à partir du circuit d'évacuation de combustible, et
   * un échangeur configuré pour chauffer le flux de combustible du circuit d'admission de combustible en échangeant de la chaleur avec le flux du circuit d'évacuation de combustible, le système de traitement du gaz recyclé étant situé en aval de l'échangeur.

Selon un autre aspect, l'invention propose une unité de génération de puissance comportant une pile à combustible hydrocarboné selon l'invention.

Selon un autre aspect, l'invention propose un véhicule comportant une pile à combustible hydrocarboné selon l'invention.

### Brève description des dessins

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique du principe de fonctionnement d'une pile à combustible ;
- la figure 2 est une représentation schématique d'une pile à combustible de l'état de l'art, comportant notamment une boucle de recirculation du carburant ;
- la figure 3 est une représentation schématique d'un mode de réalisation d'une pile à combustible selon l'invention ;
- la figure 4 est une représentation schématique d'un mode de réalisation d'une pile à combustible selon l'invention ;

### Description d'un ou plusieurs modes de mise en œuvre et de réalisation

### Généralités :

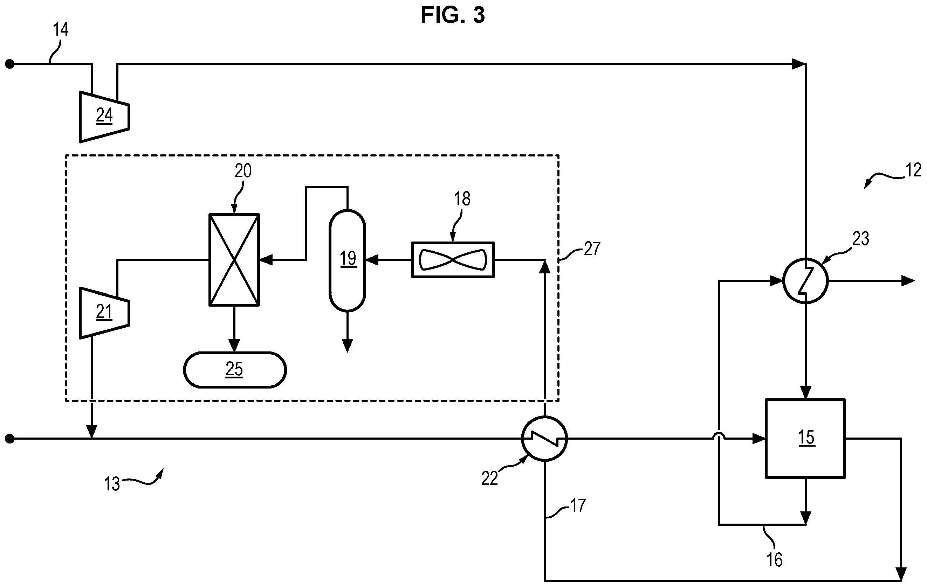

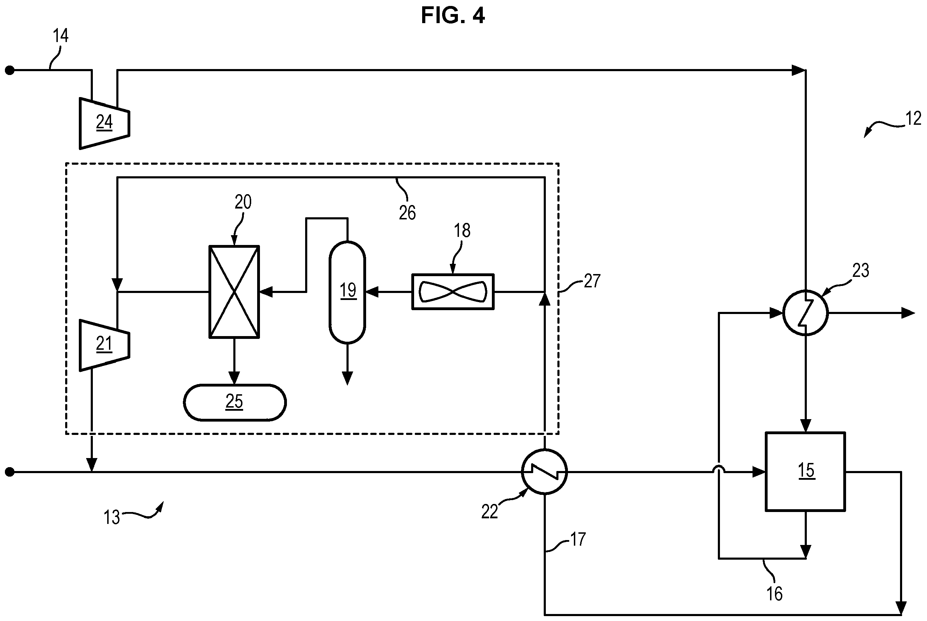

En référence aux figures 3 et 4, une pile 12 à combustible hydrocarboné comporte :
- un circuit d'admission de combustible 13 configuré pour acheminer un flux de combustible,
- un circuit d'admission d'oxydant 14 configuré pour acheminer un flux d'oxydant,
- un module réactionnel 15 dans lequel débouchent d'une part le circuit d'admission de combustible 13 et d'autre part le circuit d'admission d'oxydant 14,
- un circuit d'évacuation d'oxydant 16, configuré pour évacuer le flux d'oxydant issu du module réactionnel 15,
- un circuit d'évacuation de combustible 17 configuré pour évacuer le flux de combustible issu du module réactionnel 15, et
- un système de traitement du gaz recyclé 27 configuré pour recueillir le flux issu du module réactionnel 15, typiquement à partir du circuit d'évacuation de combustible 17, en extraire les produits de réaction, et recycler le combustible non utilisé.

Dans le mode de réalisation représenté sur la figure 3, le système de traitement du gaz recyclé 27 comporte, dans le sens d'écoulement du flux :
- un élément de refroidissement 18 configuré pour refroidir le flux de combustible transitant dans le système de traitement du gaz recyclé 27,
- un séparateur de phases 19 configuré pour séparer les phases liquide et gazeuse du flux de combustible sortant de l'élément de refroidissement 18,
- un élément de filtration 20 configuré pour extraire un ou plusieurs composés du flux issu du séparateur de phases 19.

Le flux issu de l'élément de filtration 20 est ensuite réinjecté dans le circuit d'admission de combustible 13.

Dans le mode de réalisation représenté sur la figure 4, le système de traitement du gaz recyclé 27 comporte un circuit principal et un circuit de dérivation 26. Le circuit principal comporte l'élément de refroidissement 18, le séparateur de phase 19 et l'élément de filtration 20. Le circuit de dérivation 26 est parallèle au circuit principal. Ainsi, le flux issu du module réactionnel 15 se sépare en deux parties, dont l'une circule dans le circuit de dérivation 26, et l'autre circule successivement à travers l'élément de refroidissement 18, le séparateur de phase 19 et l'élément de filtration 20.

Le flux issu de l'élément de filtration 20 et du circuit de dérivation 26 est ensuite réinjecté dans le circuit d'admission de combustible 13. Plus précisément, le flux issu de l'élément de filtration 20 et le flux issu du circuit de dérivation 26 sont, au moment d'être réinjectés dans le circuit d'admission de combustible 13, à une température inférieure à la température du module réactionnel 15. Typiquement, le module réactionnel est à une température supérieure ou égale à 600° C et inférieure ou égale à 900° C, la température du flux en sortie de l'élément de filtration est supérieure ou égale à 0°C et inférieure ou égale à 150°C, et la température du flux circulant au sein du circuit de dérivation 26 est supérieure ou égale à 60°C et inférieure ou égale à 350°C. Le flux issu de l'élément de filtration 20 peut d'ailleurs alternativement être injecté dans le circuit d'admission de combustible 13 en un même point que le flux issu du circuit de dérivation, ou en un point différent.

Dans le cas d'un combustible hydrocarboné, les principales réactions intervenant dans le module réactionnel 15 sont :
- les réactions de réformage du combustible par l'eau, produisant du monoxyde de carbone, du dioxyde de carbone et de l'hydrogène,
- l'équilibre entre monoxyde de carbone s'associant avec de l'eau d'une part, et le dioxyde de carbone s'associant avec l'hydrogène d'autre part, et
- la réaction d'oxydation de l'hydrogène, qui produit de l'eau et de l'électricité.

Ainsi, les produits de réaction retrouvés dans le flux de combustible en sortie du module réactionnel 15 contiennent notamment de l'eau, du monoxyde de carbone, du dioxyde de carbone et de l'hydrogène n'ayant pas réagi. La présence de monoxyde de carbone et d'hydrogène dans ces produits de réaction montre que le rendement de la pile 12 peut être amélioré.

C'est la raison pour laquelle le système de traitement du gaz recyclé 27 réinjecte une partie des produits de réaction dans le circuit d'admission 13. Plus précisément, le système de traitement du gaz recyclé 27 réinjecte :
- de la vapeur d'eau, ce qui évite de consommer de l'énergie pour vaporiser de l'eau avant de l'injecter dans le module réactionnel 15, et
- de l'hydrogène et du monoxyde de carbone.

Toutefois, la teneur en eau pénétrant dans le module réactionnel 15 doit être maitrisée pour tirer au maximum profit des principales réactions s'y établissant. Or, l'eau s'accumule en excès dans les produits de réaction.

C'est pourquoi, lors du passage du flux dans l'élément de refroidissement 18, une partie de l'eau présente dans le flux est condensée. Le flux diphasé passe ensuite dans le séparateur de phases 19, ce qui permet de récupérer l'eau présente dans le flux et d'évacuer l'excès vers un circuit de purge.

En outre, le dioxyde de carbone constitue également un produit de réaction qui s'accumule et dont il ne peut être tiré profit dans le module réactionnel 15.

Par conséquent, en sortie du séparateur de phases 19, le flux passe par l'élément de filtration 20, qui est avantageusement configuré pour capturer les molécules de dioxyde de carbone présentes dans le flux. Cette capture est généralement favorisée à basse température. C'est pourquoi il est avantageux que l'élément de filtration 20 se situe en aval de l'élément de refroidissement 18. Toutefois, l'extraction n'a pas besoin d'être complète puisque le recyclage fonctionne en permanence. Par conséquent, il est possible d'utiliser des dispositifs moins coûteux pour réaliser la capture du dioxyde de carbone. Ainsi, l'élément de filtration 20 peut par exemple comporter une solution d'amine configurée pour absorber les molécules de dioxyde de carbone, ou encore exploiter une méthode de séparation par membranes pour extraire le dioxyde de carbone du flux.

La capture de dioxyde de carbone permet d'éviter l'accumulation de monoxyde de carbone, grâce à l'équilibre chimique qui s'établit entre les deux espèces à la sortie du module réactionnel 15, sans qu'il soit nécessaire d'ajouter au système de traitement du gaz recyclé 27 un dispositif spécifique à cet effet (e.g. un dispositif de « *water gas shift* », dans la terminologie anglo-saxonne).

En sortie de l'élément de filtration 20, le flux, appauvri en eau et en dioxyde de carbone, est réinjecté dans le circuit d'admission 13 au moyen d'un circulateur 21, ce qui permet de récupérer et de recycler le combustible n'ayant pas réagi. Un équilibre s'établit alors entre la production d'eau et de dioxyde de carbone dans le module réactionnel 15 et l'extraction dans le système de traitement du gaz recyclé 27.

Dans le circuit principal, la capture du dioxyde de carbone peut être réalisée à une température trop faible pour que subsiste suffisamment d'eau sous forme de vapeur dans le flux réinjecté dans le circuit d'admission 13. Il peut alors être nécessaire de vaporiser une partie de l'eau récupérée par le séparateur de phase 19 avant de la réinjecter dans le circuit d'admission 13, ce qui est pénalisant sur le plan énergétique.

C'est pourquoi, dans le mode de réalisation illustré en figure 4, grâce à la séparation du flux entre le circuit principal et le circuit de dérivation 26, la capture de dioxyde de carbone peut être contrôlée indépendamment du réglage de la quantité de vapeur d'eau contenue dans le flux réinjecté dans le circuit d'admission 13.

Dans les modes de réalisation représentés sur les figures 3 et 4, le circulateur 21 est situé en aval de l'élément de filtration 20. Le flux est donc filtré avant qu'il ne transite dans le circulateur 21, ce qui permet de retirer du flux les éléments réagissant avec l'élément de filtration 20. Le débit du flux est ainsi réduit à la sortie de l'élément de filtration 20, et donc dans le circulateur 21, ce qui permet de réduire la consommation énergétique du circulateur 21.

En variante, le circulateur 21 est situé en amont de l'élément de filtration 20. Cela permet d'augmenter la pression dans l'élément de filtration 20, ce qui améliore les performances de filtrage de l'élément de filtration 20.

En outre, dans le mode de réalisation représenté sur la figure 4, le circuit de dérivation 26 peut comprendre un compresseur de dérivation (non représenté). Le compresseur de dérivation présente un taux de compression inférieur au taux de compression du circulateur 21, et permet de s'affranchir de la présence d'une vanne de contrôle dans le circuit de dérivation 26. Dans ce cas, le circuit de dérivation 26 débouche en aval du circulateur 21, dans le sens de circulation du fluide à travers la pile 12. En l'absence de compresseur de dérivation, comme illustré sur la figure 4, le circuit de dérivation 26 débouche en amont du circulateur 21. En tout état de cause, comme la température du flux dans le circuit de dérivation 26 est inférieure à celle du module réactionnel 15, cela permet, d'une part, de réduire le volume du gaz et donc la puissance de compression du compresseur de dérivation et, d'autre part, de mettre en place un compresseur de dérivation dont le coût est moins élevé. En tout état de cause, une vanne de contrôle (non représentée), peut également être prévue, alternativement ou en complément du compresseur de dérivation, au sein du circuit de dérivation 26.

Un tel système de traitement du gaz recyclé 27 présente de nombreux avantages, et notamment permet d'augmenter le rendement de la pile à combustible.

L'invention permet d'augmenter très notablement le rendement en électricité du système. La littérature pour les piles SOFC fonctionnant au gaz naturel cite des rendements ne dépassant généralement pas 60%. En effet, le rendement est largement lié au taux d'utilisation du combustible, qui ne peut atteindre 100% dans la pile. En recyclant le combustible non utilisé jusqu'à sa consommation complète, le rendement est maximisé. Dans l'exemple simulé le rendement sur PCI du gaz atteint plus de 80%.

Un deuxième avantage important est que le dioxyde de carbone extrait peut être récupéré, ce qui transforme le système en installation de combustion à faible émission de carbone. Compte tenu de la composition et du débit du gaz recyclé, la captation du dioxyde de carbone est beaucoup plus facile et économique que sur l'échappement des fumées.

Enfin, comme le gaz est recyclé, on peut extraire la totalité du dioxyde de carbone même avec un faible taux de captation par passe. Cet avantage ouvre la porte à l'utilisation de procédés de captation qui ne seraient pas compétitifs sinon.

Avantageusement, la pile 12 comporte un premier échangeur 22 et un deuxième échangeur 23, configurés pour porter les fluides entrant dans le module réactionnel 15 à la température nécessaire. Le premier échangeur 22 permet de chauffer le flux de combustible du circuit d'admission de combustible 13 en échangeant de la chaleur avec le flux du circuit d'évacuation de combustible 17. Le deuxième échangeur 23 permet de chauffer le flux d'oxydant du circuit d'admission d'oxydant 14 en échangeant de la chaleur avec le flux du circuit d'évacuation d'oxydant 16.

Avantageusement, qu'il s'agisse du mode de réalisation illustré sur la figure 3 ou du mode de réalisation illustré sur la figure 4, la différence de température entre, d'une part, le flux issu de l'élément de filtration 20 et/ou le flux issu du circuit de dérivation 26 et, d'autre part, le module réactionnel 15, est permise par l'agencement du système de traitement du gaz recyclé 27. Comme visible sur ces figures, le système de traitement du gaz recyclé 27 est situé en aval du premier échangeur 22, dans le sens de circulation du flux au sein de la pile 12. Ainsi, dans le mode de réalisation illustré sur la figure 4, l'embranchement entre le circuit principal et le circuit de dérivation 27 est situé en aval du premier échangeur 27.

Optionnellement, la pile 12 comprend des moyens de contrôle (non représentés) configurés pour ajuster, au sein du système de traitement du gaz recyclé 27, la répartition du débit de flux issu du module réactionnel 15 entre, d'une part, le circuit principal et, d'autre part, le circuit de dérivation 26. De cette manière il est possible de contrôler la proportion d'eau conservée dans le flux réinjecté dans le circuit d'admission 13.

Avantageusement, le circuit d'admission d'oxydant 14 comporte un compresseur 24 configuré pour entraîner le flux d'oxydant à travers le système.

La pile 12 comporte avantageusement un brûleur et un circuit de purge (non représentés). Le circuit de purge permet d'évacuer une partie du flux transitant dans le circuit d'évacuation de combustible 17 vers le brûleur, lorsque le débit du flux transitant dans le système de traitement du gaz recyclé 27 est trop important par rapport à la capacité de réinjection vers le circuit d'admission de combustible 13. Cela permet ainsi de fiabiliser le circuit d'évacuation de combustible 17, et cela permet de maîtriser le point de fonctionnement du système de traitement du gaz recyclé 27. Le circuit de purge permet de limiter l'accumulation et le rejet de gaz inertes.

Une telle pile à combustible peut utiliser un combustible de type gaz naturel (méthane), tout combustible liquide ou gazeux contenant du carbone et pouvant faire intervenir les réactions d'équilibre entre CO, CO2, H2O et H2 : éthane, propane, méthanol, di-methyl-ether, gaz de synthèse, CO... Optionnellement, l'élément de filtration 20 est configuré pour permettre la récupération du dioxyde de carbone qui y est capté.

L'élément de filtration 20 est configuré pour injecter le dioxyde de carbone filtré du flux de produits de réaction dans un élément de stockage 25.

Cela permet très avantageusement de supprimer les émissions de CO2 dans l'atmosphère.

En outre, le dioxyde de carbone récupéré peut avoir de très nombreuses destinations dont la liste n'est pas limitative : séquestration géologique, matière première pour des synthèses chimiques, stockage temporaire pour une intégration du système dans des applications de mobilité ou de stockage d'énergie, mise en réseau, carboglace, etc... Dans le cas d'une application à un véhicule, la suppression des émissions de CO2 dans l'atmosphère au cours du fonctionnement est particulièrement avantageuse, notamment en raison de politiques anti-pollution de plus en plus exigeantes envers ces émissions.

Une telle pile à combustible peut être utilisée dans tout système de génération électrique, qu'il soit intégré à un réseau de production d'énergie ou à un système mobile.

## Revendications

1. Pile (12) à combustible hydrocarboné comportant :
- un circuit d'admission de combustible (13) configuré pour acheminer un flux de combustible,
- un module réactionnel (15) dans lequel débouche le circuit d'admission de combustible (13), et
- un système de traitement du gaz recyclé (27) configuré pour recueillir le flux de combustible issu du module réactionnel (15),
le système de traitement du gaz recyclé (27) comportant un circuit principal et un circuit de dérivation (26),
la pile (12) étant configurée pour que le flux issu du module réactionnel (15) se divise entre le circuit principal et le circuit de dérivation (26), le circuit principal comportant un élément de filtration (20) configuré pour extraire du dioxyde de carbone de la partie du flux issue du module réactionnel (15) circulant au sein du circuit principal,
la pile (12) étant configurée pour que le flux issu du circuit principal et du circuit de dérivation (26) soit réinjecté dans le circuit d'admission de combustible (13) avec une température inférieure à la température du module réactionnel (15).

2. Pile (12) à combustible hydrocarboné selon la revendication 1, dans laquelle le circuit principal comporte en outre un élément de refroidissement (18) configuré pour condenser au moins en partie le flux de combustible transitant dans le circuit principal, et un séparateur de phases (19) configuré pour séparer les phases liquide et gazeuse du flux de combustible sortant de l'élément de refroidissement (18).

3. Pile (12) à combustible hydrocarboné selon la revendication 2, dans laquelle l'élément de filtration (20) est situé en aval de l'élément de refroidissement (18) et du séparateur de phases (19).

4. Pile (12) à combustible hydrocarboné selon l'une des revendications 1 à 3, comprenant en outre un circulateur (21) situé en aval de l'élément de filtration (20) configuré pour réinjecter le flux sortant de l'élément de filtration (20) dans le circuit d'admission (13).

5. Pile (12) à combustible hydrocarboné selon la revendication 4, dans laquelle le circulateur (21) est configuré pour réinjecter le flux issu du circuit de dérivation (26) dans le circuit d'admission (13).

6. Pile (12) à combustible hydrocarboné selon l'une des revendications 1 à 5, comportant des moyens de contrôle configurés pour ajuster la répartition du débit de flux issu du module réactionnel (15) entre, d'une part, le circuit principal et, d'autre part, le circuit de dérivation (26).

7. Pile (12) à combustible hydrocarboné selon l'une des revendications 1 à 6, comportant en outre un dispositif de stockage (25) et dans lequel l'élément de filtration (20) est adapté pour injecter le dioxyde de carbone capté lors de la filtration du flux dans le dispositif de stockage (25).

8. Pile (12) à combustible hydrocarboné selon l'une des revendication 1 à 6, comportant en outre :
- un circuit d'évacuation de combustible (17) configuré pour évacuer le flux de combustible issu du module réactionnel (15), le système de traitement du gaz recyclé (27) étant configuré pour recueillir le flux issu du module réactionnel (15) à partir du circuit d'évacuation de combustible (17), et
- un échangeur (22) configuré pour chauffer le flux de combustible du circuit d'admission de combustible (13) en échangeant de la chaleur avec le flux du circuit d'évacuation de combustible (17), le système de traitement du gaz recyclé (27) étant situé en aval de l'échangeur (22).

9. Unité de génération de puissance comportant une pile (12) à combustible hydrocarboné selon l'une des revendications 1 à 8.

10. Véhicule comportant une pile (12) à combustible hydrocarboné selon l'une des revendications 1 à 9.
